# EUROPÄISCHE PATENTSCHRIFT

(11) **EP 0 502 323 B1**
(45) Veröffentlichungstag und Bekanntmachung des Hinweises auf die Patenterteilung: **08.11.1995**
(21) Anmeldenummer: 92101682.0
(22) Anmeldetag: 01.02.1992
(51) Int. Cl.: G01G 23/36, G09F 9/30

(54) **Elektronische Waage mit Digitalanzeige**
Electronic balance with digital display
Balance électronique à affichage digital

(30) Priorität: 06.03.1991 DE 4107104
(43) Veröffentlichungstag der Anmeldung: 09.09.1992
(73) Patentinhaber: SARTORIUS AG, 37075 Göttingen (DE)
(72) Erfinder: Schubart, Bernd, W-3400 Göttingen (DE); Thornagel, Klaus, W-3406 Bovenden (DE)
(74) Vertreter: Köhler, Rudolf

(56) Entgegenhaltungen:
- EP-A- 0 132 054
- DE-A- 2 651 542
- DE-A- 2 718 769
- DE-U- 8 618 818
- LU-A- 80 622
- US-A- 4 242 980

## Beschreibung

Die Erfindung bezieht sich auf eine elektronische Waage mit einer digitalen Anzeige des Wageergebnisses, bei der zumindest die letzte Ziffer des Wägeergebnisses optisch von den übrigen Ziffern unterschieden ist.

Eine elektronische Waage dieser Art ist z.B. aus der DE-OS 27 18 769 bekannt. Dort wird zur Erleichterung des Dosiervorganges vorgeschlagen, zumindest die letzte Ziffer dunkler oder in einer anderen Farbe erscheinen zu lassen oder diese Ziffer(n) beispielsweise durch einen Stern oder durch Unterstreichung zu kennzeichnen. Daneben ist es bei geeichten Waagen, bei denen die Auflösung und der Eichwert verschieden sind, bekannt, die letzte Ziffer durch eine überlagerte Schraffur zu kennzeichnen. Diese Schraffur stört die Ablesung der darunterliegenden Ziffer(n) deutlich. Die Kennzeichnung durch einen Stern oder durch Unterstreichung läßt die Anzahl der gekennzeichneten Ziffern nicht deutlich hervortreten. Die Kennzeichnung durch eine andere Farbe ist bei LCD-Anzeigen nur durch vorgesetzte Farbfilter möglich und laßt sich daher nicht durch elektrische Signale ändern. Die Kennzeichnung durch geringere Leuchtkraft ist stark von der Umgebungshelligkeit abhängig und daher nicht unter allen Umständen erkennbar.

Die DE-U-86 18 818 zeigt für plus minus Abweichungen Innensegmente oder Innensegmente und Außensegmente (Umrahmung).

Aufgabe der Erfindung ist es daher, eine verbesserte optische Unterscheidung einer oder mehrerer Ziffern des Wägeergebnisses zu erreichen, die auch für LCD-Anzeigen geeignet ist. Diese Kennzeichnung soll dabei einerseits die Ablesbarkeit des Wägeergebnisses möglichst wenig beeinträchtigen und andererseits so eindeutig sein, daß auch die Anforderungen der Eichbehörden bei Waagen mit von der Auflösung abweichendem Eichwert erfüllt werden.

Erfindungsgemäß wird dies dadurch erreicht, daß die optische Unterscheidung allern durch eine Umrahmung der Ziffer(n) erfolgt oder erfolgen kann.

Die Umrahmung kann dabei vorteilhafterweise durch eine unterbrochene Linie gebildet werden, da in diesem Fall die Kontaktierung der Segmente der umrahmten Ziffer(n) am problemlosesten ist. Dasselbe gilt für eine Zick-Zack-Linie als Umrahmung, die in den Ecken unterbrochen sein kann, ohne daß der geschlossene Eindruck der Umrahmung leidet. Es ist jedoch auch eine geschlossene Linie als Umrahmung möglich.

Vorteilhafterweise wird die Umrahmung elektrisch ansteuerbar ausgeführt, so daß es möglich ist, die Umrahmung ein- und auszuschalten. Dadurch ist eine einfache Anpassung an verschiedene Einsatzfälle möglich. In dieser Ausgestaltung ist es auch möglich, mehrere Umrahmungen vorzusehen, die wahlweise angesteuert werden können.

Die Erfindung wird im folgenden anhand der schematischen Zeichnungen beschrieben. Dabei zeigt:
- Fig. 1: in perspektivischer Darstellung eine elektronische Waage mit Kennzeichnung der letzten Ziffer,
- Fig. 2: die Anzeige der Waage aus Fig. 1, wobei alle anzeigbaren Segmente dargestellt sind,
- Fig. 3: die Anzeige in einer zweiten Ausgestaltung,
- Fig. 4: die Anzeige in einer dritten Ausgestaltung,
- Fig. 5: die Anzeige in einer vierten Ausgestaltung,
- Fig. 6: die Anzeige in einer fünften Ausgestaltung und
- Fig. 7: die Anzeige in einer sechsten Ausgestaltung.

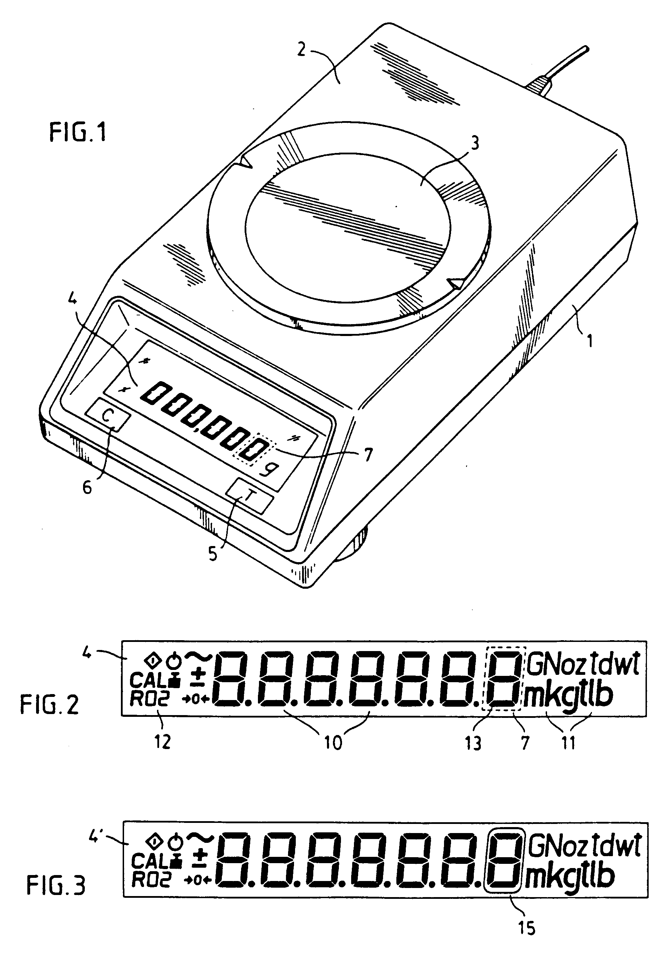

In der perspektivischen Darstellung der Waage in Fig. 1 erkennt man das Gehäuseunterteil 1, das Gehäuseoberteil 2, die Waagschale 3, die Bedienungstasten 5 und 6 sowie die Anzeige 4. Die letzte Ziffer der Anzeige, also die mg-Ziffer, ist durch eine gestrichelte Umrahmung 7 gekennzeichnet. Diese Kennzeichnung erfolgt z.B. bei geeichten Waagen, wenn der Eichwert e = 10 mg beträgt, die mg-Ziffer aber zusätzlich angezeigt wird.

Die Anzeige 4 aus Fig. 1 ist in Fig. 2 nochmal vergrößert in Aufsicht gezeigt, wobei alle ansteuerbaren Segmente eingezeichnet sind. Neben den Ziffern 10 zur Anzeige des Meßergebnisses erkennt man auf der rechten Seite einen Bereich 11, in dem verschiedene Maßeinheiten angesteuert werden können, und auf der linken Seite einen Bereich 12, in dem das Vorzeichen, verschiedene Wägebereiche, Kalibriersymbole etc. angesteuert werden können. Die letzte Ziffer 13 des Meßergebnisses ist durch einen gestrichelten Rahmen 7 gekennzeichnet.

Fig. 3 zeigt die Anzeige 4' in einer anderen Ausgestaltung: Der Rahmen 15 um die letzte Ziffer ist dabei als durchgehende Linie ausgeführt.

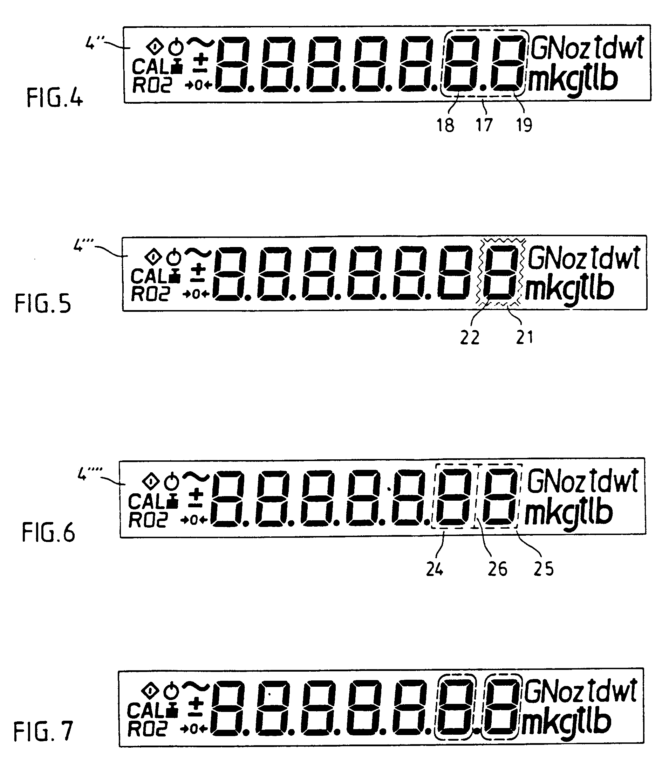

Fig. 4 zeigt die Anzeige 4'' in einer dritten Ausgestaltung: Der Rahmen 17 ist in dieser Ausgestaltung als gestrichelte Linie ausgeführt und umfaßt die beiden letzten Ziffern 18 und 19.

Fig. 5 zeigt die Anzeige 4''' in einer vierten Ausgestaltung: Der Rahmen 21 um die letzte Ziffer ist in dieser Ausgestaltung als Zick-Zack-Linie ausgeführt. In den vier Ecken ist die Zick-Zack-Linie unterbrochen, damit die einzelnen Segmente der umrahmten Ziffer 22 ohne eine zweite Lage kontaktiert werden können. Durch die Zick-Zack-Form der Umrahmung entsteht trotzdem der Eindruck einer geschlossenen Umrahmung.

Fig. 6 zeigt die Anzeige 4'''' in einer fünften Ausgestaltung: Der Rahmen ist in zwei Hälften 24 und 25 unterteilt und weist eine zusätzliche Mittellinie 26 auf. Dadurch kann durch Auftasten der beiden Hälften 24 und 25 ein großer Rahmen um die letzten beiden Ziffern gelegt werden oder durch Auftasten der Mittellinie 26 und der rechten Rahmenhälfte 25 ein Rahmen um die letzte Ziffer oder durch Auftasten der linken Rahmenhälfte 24 und der Mittellinie 26 ein Rahmen um die vorletzte Ziffer. Der letzte Fall wird z.B. bei einer Zwei-Bereichs-Waage benötigt, wenn im groberen Bereich die letzte Ziffer ganz dunkel getastet wird und der Rahmen dann nur die vorletzte Ziffer umfassen soll. Im feineren Bereich wird dann entweder der große Rahmen 24/25 um beide Ziffern gelegt (wenn sich der Eichwert in beiden Bereichen nicht unterscheidet) oder aber der kleine Rahmen 25/26 um die letzte Ziffer gelegt (wenn der Eichwert im feineren Bereich um den Faktor 10 kleiner ist als im groberen Bereich).

Selbstverständlich können auch mehrere Ziffern einzeln umrahmt werden, wie es in Fig. 7 für zwei Ziffern gezeigt ist oder die variable Umrahmung aus Fig. 6 kann auf drei Ziffern ausgedehnt werden. Genauso ist der Austausch der gestrichelten, gezackten oder durchgehenden Linien untereinander als Umrahmungen beliebig möglich.

Eine weitere Variante ist die teilweise z.B. U-förmige Umrahmung (Halbumrahmung) der oberen oder unteren Segmente der hervorzuhebenden Ziffer. Gleichermaßen ist die Hervorhebung auch durch eine ansteuerbare Inversanzeige von Rahmen bzw. Hintergrund und Ziffer möglich, wie es bei Bildschirmen üblich ist.

## Patentansprüche

1. Elektronische Waage (1,2) mit einer digitalen Anzeige (4) des Wägeergebnisses, bei der zumindest die letzte Ziffer des Wägeergebnisses optisch von den übrigen Ziffern unterschieden ist, dadurch gekennzeichnet, daß die optische Unterscheidung allein durch eine Umrahmung (7,15, 17,21,24,25,26) der Ziffer(n) erfolgt oder erfolgen kann.

2. Waage nach Anspruch 1, dadurch gekennzeichnet, daß die Umrahmung aus einer unterbrochenen Linie (7,17,24,25,26) besteht.

3. Waage nach Anspruch 1, dadurch gekennzeichnet, daß die Umrahmung aus einer geschlossenen Linie (15) besteht.

4. Waage nach Anspruch 1, dadurch gekennzeichnet, daß die Umrahmung aus einer Zick-Zack-Linie (21) besteht, die in den Ecken unterbrochen ist.

5. Waage nach einem der Ansprüche 1 bis 4, dadurch gekennzeichnet, daß die Umrahmung (7,15,17,21,24,25,26) elektrisch ansteuerbar ist und dadurch ein-/ausschaltbar ist.

6. Waage nach Anspruch 1 und 5, dadurch gekennzeichnet, daß die Umrahmung der Ziffer(n) und die Ziffer(n) als bildschirmartige Inversanzeige ausgebildet sind.

7. Waage nach Anspruch 5, dadurch gekennzeichnet, daß mehrere ansteuerbare Umrahmungen (24,25,26) vorgesehen sind.

## Claims

1. Electronic balance (1, 2) having a digital display (4) of the weighing result, in the case of which at least the last digit of the weighing result is visually distinguished from the other digits, wherein the visual distinction is produced or can be produced just by an outline (7, 15, 17, 21, 24, 25, 26) around the digit or digits.

2. Balance according to Claim 1, wherein the outline comprises a dashed line (7, 17, 24, 25, 26).

3. Balance according to Claim 1, wherein the outline comprises a solid line (15).

4. Balance according to Claim 1, wherein the outline comprises a zig-zag line (21) which is interrupted in the corners.

5. Balance according to one of Claims 1 to 4, wherein the outline (7, 15, 17, 21 24, 25, 26) can be driven electrically and in consequence can be switched on/off.

6. Balance according to Claims 1 and 5, wherein the outline of the digit or digits and the digit or digits are designed as a screen-like inverse display.

7. Balance according to Claim 5, wherein a plurality of outlines (24, 25, 26), which can be driven, are provided.

## Revendications

1. Balance électronique (1,2) avec affichage digital (4) du résultat de mesure sur lequel au moins le dernier chiffre du résultat de mesure se différencie visuellement des autres chiffres, caractérisé en ce que la distinction visuelle se fait ou peut se faire seulement par un encadrement (7, 15, 17, 21, 24, 25, 26) du(des) chiffre(s).

2. Balance selon la revendication 1, caractérisée en ce que l'encadrement se compose d'une ligne discontinue (7, 17, 24, 25, 26).

3. Balance selon la revendication 1, caractérisée en ce que l'encadrement se compose d'une ligne fermée (15)

4. Balance selon la revendication 1, caractérisée en ce que l'encadrement se compose d'une ligne en zigzag (21) qui est discontinue dans les angles.

5. Balance selon l'une quelconque des revendications 1 à 4, caractérisée en ce que l'encadrement (7, 15, 17, 21, 24, 25, 26) peut être sélectionné électriquement et peut être ainsi allumé/ éteint.

6. Balance selon la revendication 1 et la revendication 5, caractérisée en ce que l'encadrement du(des) chiffre(s) et le(s) chiffre(s) sont conçus comme affichage inverse usuel sur un écran.

7. Balance selon la revendication 5, caractérisée en ce que plusieurs encadrements sélectionnables (24, 25, 26) sont prévus.
